# EUROPÄISCHE PATENTANMELDUNG

(11) **EP 0 950 878 A1**
(43) Veröffentlichungstag der Anmeldung: **20.10.1999**
(21) Anmeldenummer: 98106249.0
(22) Anmeldetag: 06.04.1998
(51) Int. Cl.: G01F 23/00, G01F 23/74, G01F 23/72, G01F 23/38

(54) **Einrichtung zur Erfassung des Flüssigkeitsstandes**

(71) Anmelder: GEIGER TECHNIK GmbH & Co. KG, D-82467 Garmisch-Partenkirchen (DE)
(72) Erfinder: Geiger, Albert, 82467 Garmisch-Partenkirchen (DE)
(74) Vertreter: Flosdorff, Jürgen, Dr.

(57) **Zusammenfassung**

Die Einrichtung zur Erfassung des Flüssigkeitsstandes in einem Behälter enthält einen Schwimmer, der mit einem Magneten oder einem Element aus ferromagnetischen Material verbunden ist, der bzw. das mit wenigstens einem Hall-Sensor zusammenwirkt, der wenigstens ein einem Flüssigkeitsstand entsprechendes Signal für eine Anzeigeeinrichtung erzeugt. Die Niveauüberwachungseinrichtung ist sowohl zur Anzeige eines oder mehrerer bestimmter Flüssigkeitsstände als auch zu deren kontinuierlichen Anzeige geeignet und arbeitet mit größter Zuverlässigkeit und Genauigkeit.

## Beschreibung

Die Erfindung betrifft eine Einrichtung zur Erfassung des Flüssigkeitsstandes in einem Behälter, bei dem es sich beispielsweise um einen Bremsflüssigkeitsbehälter, einen Benzintank, einen Kühlwasserbehälter, einen Lenkflüssigkeitsbehälter, einen Scheibenwaschbehälter, einen Ölbehälter oder dergleichen handeln kann.

Zur Flüssigkeitsniveauüberwachung werden meist Reed-Schalter eingesetzt. Diese Reed-Schalter haben zwei normalerweise in einem kleinen Abstand voneinander angeordnete Kontakte, die sich in einem zugeschweißten Glasröhrchen befinden, das mit einem inerten Schutzgas gefüllt ist. Bei Annäherung eines Magneten werden die Kontakte geschlossen, wodurch ein Schaltvorgang ausgelöst wird. Dieser Schaltvorgang kann beispielsweise das Aufleuchten eines Lämpchens bewirken, das auf das Erreichen eines Mindestflüssigkeitsstandes hinweist.

Reed-Schalter sind verhältnismäßig preiswert, sie haben aber eine ziemlich hohe Fehlerquote. Wenn sich in dem Glasröhrchen partikelförmige Fremdstoffe befinden, die sich zwischen die Kontakte setzen, können sie deren Berührung verhindern. Bei Einwirken einer schlagartigen Belastung kann zudem das Glasröhrchen leicht brechen und das Ansprechverhalten des Reed-Schalters verändern.

Der vorliegenden Erfindung liegt die Aufgabe zugrunde, eine Einrichtung zur Erfassung des Flüssigkeitsstandes anzugeben, die weniger fehleranfällig ist.

Diese Aufgabe wird erfindungsgemäß durch die Merkmale der Patentansprüche 1 und 2 gelöst.

Vorteilhafte Ausgestaltungen der Erfindung ergeben sich aus den Unteransprüchen.

Die erfindungsgemäße Niveauüberwachungseinrichtung verwendet einen Hall-Sensor, der auf zwei verschiedene Arten wirken kann. Zum einen kann vorgesehen sein, daß sich dem Hall-Sensor ein Magnet annähert oder sich von diesem entfernt, der entweder direkt mit einem Schwimmer oder beispielsweise über ein Hebelsystem mit einem solchen verbunden ist. Das Magnetfeld des Dauermagneten lenkt in Abhängigkeit von seiner Stärke einen Stromfluß durch das Siliciumelement des Hall-Sensors mehr oder weniger weit ab, wodurch ein oder mehrere Signale und damit beispielsweise Schaltvorgänge hervorgerufen werden können.

Der Hall-Sensor kann aber auch mit einem Magneten versehen sein, während der Schwimmer entweder direkt oder über ein Hebelsystem mit einem Element aus ferromagnetischem Werkstoff verbunden ist, das den magnetischen Fluß durch den Hall-Sensor und damit den Stromfluß durch den Hall-Sensor verändert.

Hall-Sensoren haben eine äußerst geringe Fehlerquote, und sie sind weitestgehend unempfindlich gegen schlagartige mechanische Belastung, so daß die erfindungsgemäße Einrichtung zur Erfassung des Flüssigkeitsstandes in einem Behälter mit sehr viel höherer Zuverlässigkeit arbeitet, als dies beim Stand der Technik der Fall ist.

Es liegt im Rahmen der Erfindung, daß die Niveauüberwachungseinrichtung mehrere Hall-Sensoren enthalten kann, worauf weiter unten noch näher eingegangen wird.

Der wenigstens eine Hall-Sensor kann ein oder mehrere Signale zur diskreten Anzeige eines oder mehrerer Flüssigkeitsstände erzeugen, beispielsweise können die Flüssigkeitsstände 4/4, 3/4, 2/4 und 1/4 angezeigt werden.

Der wenigstens eine Hall-Sensor kann aber auch Signale zur kontinuierlichen Anzeige des Flüssigkeitsstandes abgeben, wozu er gegebenenfalls mit einer Auswerteelektronik ausgerüstet sein kann.

Bevorzugt ist, daß der Hall-Sensor auf einer Platine sitzt, die über Kontaktfahnen die Signale aus dem Behälter herausführen kann und dabei beispielsweise einer Anzeigeeinrichtung zuführt, bei der es sich beispielsweise um eine Tankanzeige handeln kann.

Die Platine ist dabei bevorzugt mit Kunststoff umspritzt, wobei der Hall-Sensor in einem Aufnahmeraum sitzen kann, der aus der Kunststoffumspritzung ausgespart ist und beispielsweise durch einen aufgeschweißten Deckel gegen die umgebende Flüssigkeit abgeschirmt ist. Dies bedeutet, daß der Hall-Sensor selbst bevorzugt nicht in Kunststoff eingebettet ist, wodurch das Auftreten von Spannungen in dem Siliciumelement von vorneherein vermieden wird. Grundsätzlich liegt es aber im Rahmen der Erfindung, daß der Hall-Sensor ebenfalls durch einen geeigneten Kunststoff umspritzt sein kann oder bevorzugt damit ausgegossen wird.

Die Platine mit dem Hall-Sensor kann aber auch auf andere Weise gegen die Flüssigkeit abgeschirmt sein, beispielsweise durch ein rohrförmiges Gehäuse.

Der wenigstens eine Hall-Sensor muß auch nicht unbedingt auf einer Platine sitzen, sondern er kann auf geeignete Weise mit Kontaktfahnen in Verbindung stehen, die beispielsweise durch den Gehäusedeckel hindurchführen, um die Signale des wenigstens einen Hall-Sensors einer Auswerte- und/oder Anzeigeeinrichtung zuzuführen.

Wenn der Hall-Sensor mit einem Magneten versehen ist und der Schwimmer -der sich dem Hall-Sensor annähert oder sich von diesem entfernt- direkt oder über ein Gestänge mit einem Element aus ferromagnetischen Metall verbunden ist, wird der Magnet zusammen mit dem Hall-Sensor gegenüber der Flüssigkeit in dem Behälter abgekapselt, wodurch Korrosionsprobleme bei dem Magneten vermieden sind. Diese Ausbildung hat auch den Vorteil, daß der Schwimmer ein besonders geringes Gewicht haben kann, da als Element aus ferromagnetischem Material ein dünnes Blech ausreicht, das nur ein geringes Gewicht hat, wodurch der Schwimmer besonders klein ausgeführt sein kann.

Nach einem weiteren wesentlichen Gesichtspunkt der Erfindung kann der wenigstens eine Hall-Sensor im Bereich eines Luftspaltes eines aus ferromagnetischem Material bestehenden Bauteils angeordnet sein, das einen weiteren Spalt aufweist, in dem sich der Schwimmer mit dem Magneten oder aber der Magnet allein bewegt, wenn dieser über ein Gestänge mit einem Schwimmer verbunden ist. Dabei kann das aus ferromagnetischem Material bestehende Bauteil vertikal in dem Behälter angeordnet sein.

Der weitere Spalt, in dem sich der Magnet bewegt, der entweder direkt mit dem Schwimmer oder über ein Gestänge mit diesem verbunden ist, kann nach einem weiteren Vorschlag der Erfindung eine Keilform haben, so daß mit der Position des Magneten jeweils die Spaltbreite variiert, die das Magnetfeld beeinflußt.

Der Spalt kann die Form eines geradlinigen Keils oder eines gebogenen Keils haben.

Der Spalt kann sich auch stufenweise verbreitern (oder verengen), was insbesondere dann bevorzugt ist, wenn diskrete Anzeige- oder Schaltvorgänge hervorgerufen werden sollen. Die keilförmige Spaltform ist vor allem für kontinuierliche Anzeigen geeignet.

Nach einem weiteren Vorschlag der Erfindung können in einer bevorzugt vertikalen Wand des aus ferromagnetischem Material bestehenden Bauteils mehrere, vorzugsweise vier Luftspalte im Abstand übereinander ausgebildet sein, in denen jeweils ein Hall-Sensor sitzt. Im Abstand neben dieser Wand befindet sich bevorzugt eine durchgehende weitere Wand, wodurch ein vertikaler Kanal gebildet ist, der zur Führung eines Schwimmers mit Magneten geeignet ist.

In Abhängigkeit von der jeweiligen Position des Magneten treten dabei an den vier Luftspalten jeweils zugehörige Luftspalt-Verluste am Magnetfeld auf, die beispielsweise zur Anzeige von vier Flüssigkeitsständen genutzt werden können. Mit einer Auswerteelektronik können die Signale der vier Hall-Sensoren auch zur weitgehend kontinuierlichen Flüssigkeitsniveauanzeige herangezogen werden.

Weitere Einzelheiten der Erfindung ergeben sich aus der nachfolgenden Beschreibung einiger bevorzugter Ausführungsformen der Erfindung mit Bezug auf die Zeichnung. Dabei zeigen auf weitgehend schematische Weise:
- Fig. 1: Ansichten eines wesentlichen Teils einer ersten Ausführungsform der Erfindung;
- Fig. 2: eine Variation der Ausführungsform gemäß Fig. 1;
- Fig. 3: eine weitere Variation der Ausführungsform gemäß Fig. 1;
- Fig. 4: eine zweite Ausführungsform der Erfindung;
- Fig. 5: eine Variation der Ausführungsform gemäß Fig. 4;
- Fig. 6: Darstellungen einer dritten Ausführungsform der Erfindung;
- Fig. 7: eine Variation der Ausführungsform gemäß Fig. 6;
- Fig. 8: eine weitere Variation der Ausführungsform gemäß Fig. 6;
- Fig. 9: Darstellungen eines wesentlichen Teils einer vierten Ausführungsform der Erfindung;
- Fig. 10: eine Variation der Ausführungsform gemäß Fig. 9;
- Fig. 11: eine fünfte Ausführungsform der Erfindung.

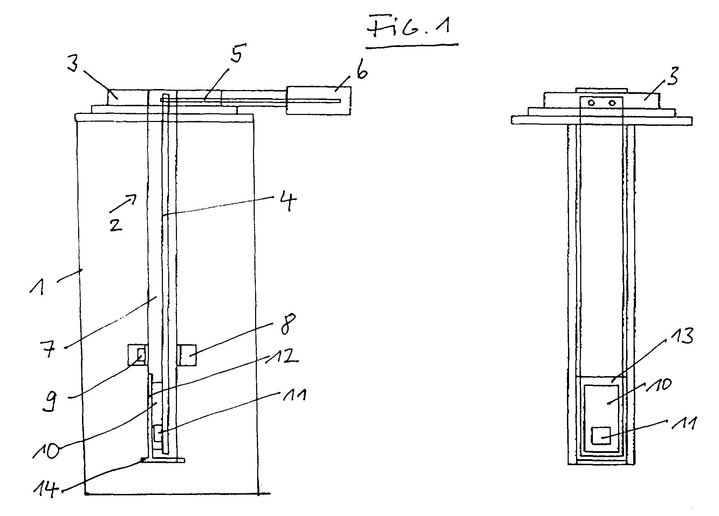

Fig. 1 zeigt rein schematisch einen Behälter 1, in dem sich eine Flüssigkeit befindet, deren Flüssigkeitsstand von einer insgesamt mit 2 bezeichneten Niveauüberwachungseinrichtung erfaßt wird. Der Behälter 1 ist von einem Deckel 3 verschlossen, in den das obere Ende einer Platine 4 eingelassen ist, von der Kontaktfahnen 5 mit einem Stecker 6 nach außen führen, um ein oder mehrere den Flüssigkeitsstand anzuzeigende Signale einer nicht dargestellten Anzeigeeinrichtung zuzuführen. Es liegt im Rahmen der Erfindung, daß die Niveauüberwachungseinrichtung auch auf andere Weise in oder an dem Behälter befestigt sein kann.

Die Platine 4 ist mit einer Kunststoffschicht 7 umspritzt, die in der Ausführungsform der Figur 1 einem Schwimmer 8 als Führung dient, der ringförmig die umspritzte Platine umfaßt und in den ein Magnet 9 eingebettet ist.

Die Platine 4 ist nicht vollständig mit Kunststoff umspritzt, sondern es bleibt ein Bereich 10 hiervon ausgespart, in dem ein Hall-Sensor 11 auf der Platine 4 sitzt. Die Aussparung 10 ist von einem Deckel 12 verschlossen, der beispielsweise auf den Rand 13 der Aussparung 10 aufgeschweißt ist. Der Hall-Sensor 11 ist durch den Deckel 12 gegenüber der Flüssigkeit in dem Behälter 1 abgeschirmt, und da zwischen dem Deckel 12 und dem Hall-Sensor 11 ein Zwischenraum verbleibt, ist sichergestellt, daß der Hall-Sensor 11 keinen Druckkräften ausgesetzt ist.

Am unteren Rand der die Platine 4 enthaltenden, von dem Deckel 3 in den Flüssigkeitsbehälter 1 herabragenden Säule befindet sich ein Anschlag 14 für den Schwimmer 8.

Der Hall-Sensor 11 ist als solcher bekannt, so daß hier auf die Beschreibung seiner Funktion und Wirkungsweise verzichtet werden kann. In Abhängigkeit von der Entfernung des Magneten 9 erzeugt der Hall-Sensor 11 ein oder mehrere Signale, die als Anzeige eines zugehörigen Flüssigkeitsstandes über die Kontaktfahnen 5 beispielsweise an eine Anzeigeeinrichtung weitergeführt werden, die sich am Armaturenbrett eines Kraftfahrzeuges befinden kann.

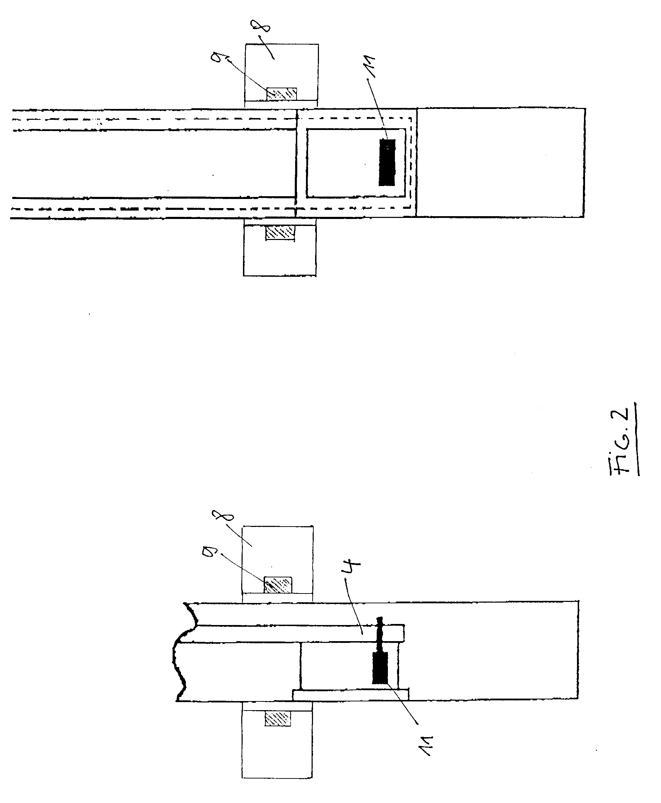

Bei der in Fig. 2 dargestellten Variation ist in dem ringförmigen Schwimmer 8 ein ebenso ringförmiger Magnet 9 eingebettet.

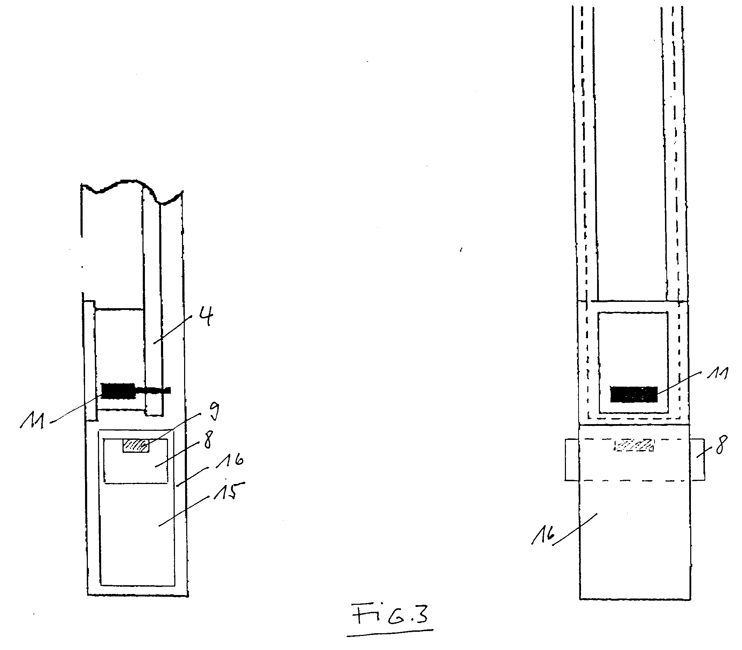

Bei der in Fig. 3 dargestellten Variation nähert sich der Schwimmer 8 dem Hall-Sensor 11 von der anderen Richtung an. Der Schwimmer 8 kann hierzu in einer Aussparung 15 in einer Verlängerung 16 des die Platine 4 umgebenden Kunststoffkörpers auf geeignete (nicht dargestellte) Weise geführt sein.

Bei der Ausführungsform der Fig. 1 (und den zugehörigen Variationen) ist nur ein Hall-Sensor 11 angeordnet. Es versteht sich jedoch, daß in verschiedenen Höhenpositionen auch mehrere Hall-Sensoren angeordnet sein können, um entweder mehrere bestimmte Flüssigkeitsstände genauestens erfassen zu können oder aber über eine Auswerteelektronik eine kontinuierliche Flüssigkeitsanzeige hervorrufen zu können.

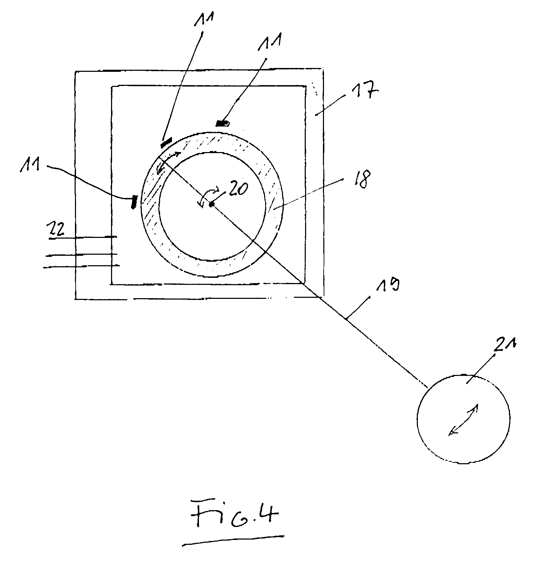

In Fig. 4 ist eine Ausführungsform dargestellt, bei der in einem Flüssigkeitsbehälter ein Gehäuse 17 angebracht ist, in dem sich ein ringförmiger Magnet 18 befindet, der über ein Hebelsystem 19 um einen Punkt 20 drehbar gelagert ist. Das nur schematisch angedeutete Hebelsystem 19 ist mit einem Schwimmer 21 verbunden und dreht den Magneten 18 entsprechend der Höhenposition des Schwimmers 21. Durch geeignete Dichtungen ist sichergestellt, daß ins Innere des Gehäuses 17 keine Flüssigkeit eindringen kann.

Der Ringmagent 18 hat mehrere über seinen Umfang verteilte Pole. Über seinen Umfang verteilt sind außerdem mehrere, bei der Ausführungsform der Fig. 4 drei Hall-Sensoren 11 fixiert, die mit einer Platine und/oder Kontaktfahnen 22 in Verbindung stehen (nicht dargestellt), wobei gegebenenfalls auch eine Auswerteelektronik für die Signale der drei Hall-Sensoren vorgesehen sein kann.

Die Hall-Sensoren 11 erfassen über die Winkellage des Ringmagneten 18 entweder einzelne vorbestimmte Flüssigkeitsstände (z.B. 3/3, 2/3 und 1/3 gefüllt), oder sie zeigen diesen durch entsprechende Signale kontinuierlich an.

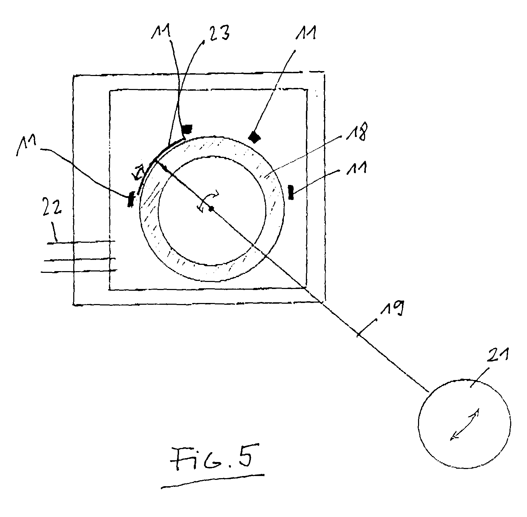

Bei der in Figur 5 rein schematisch dargestellten Variation der Ausführungsform gemäß Fig. 4 ist der Ringmagnet 18 unbeweglich befestigt, während der Schwimmer 21 über das Gestänge 19 mit einem aus ferromagnetischen Material bestehenden Element verbunden ist, das eine der Kreisringform des Magneten 18 entsprechende Krümmung aufweist. Das Blech 23 wird je nach Flüssigkeitsstand entlang des Umfangs des Magneten 18 zwischen diesem und den Hall-Sensoren 11 bewegt und moduliert dabei in Abhängigkeit von seiner jeweiligen Lage das magnetische Feld des Ringmagneten 18, das auf die Hall-Sensoren 11 einwirkt und entsprechende Signale hervorruft. Bei der Variation gemäß Fig. 5 sind vier Hall-Sensoren angeordnet, die einen vorbestimmten Abstand voneinander haben.

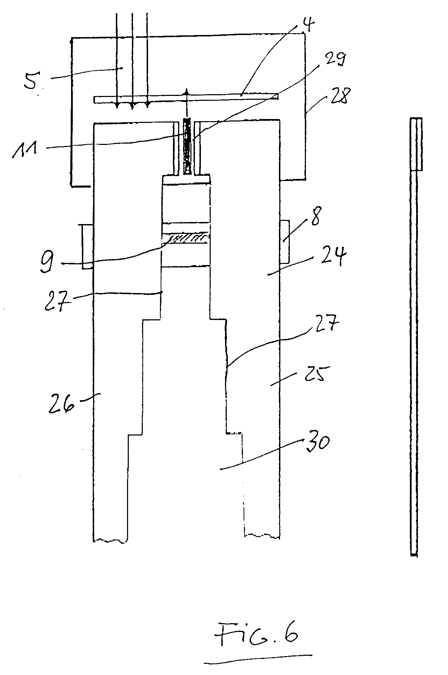

Bei der Ausführungsform der Fig. 6 ist in dem Flüssigkeitsbehälter ein aus ferromagnetischem Material also beispielsweise Eisen, bestehendes Bauteil 24 angeordnet, das aus zwei spiegelsymmetrischen Hälften 25, 26 besteht, die eine einander zugewandte stufenförmige Innenkontur 27 haben. Hierdurch ist zwischen den beiden Hälften 25, 26 ein Spalt gebildet, der sich in der Einbaulage von oben nach unten stufenförmig verbreitert.

Der obere Bereich des Bauteils 24 ist durch ein Gehäuse 28 gegenüber der in dem Flüssigkeitsbehälter befindlichen Flüssigkeit abgekapselt. In dem zwischen den Hälften 25, 26 am oberen Randbereich verbliebenen Luftspalt 29 sitzt ein Hall-Sensor 11, der wiederum mit einer ebenfalls in dem Gehäuse 28 befindlichen und von diesem gegen Flüssigkeit abgeschirmten Platine 4 verbunden ist, von der Kontaktfahnen 5 auf nicht näher dargestellt Weise aus dem Flüssigkeitsbehälter herausführen.

Das ferromagnetische Bauteil 24 dient einem Schwimmer 8 als Führung, in den ein Magnet 9 eingelassen ist, der in dem stufenförmig sich von oben nach unten verbreiternden Spalt bzw. Zwischenraumraum 30 des Bauteils 24 sitzt.

Die Breite des Zwischenraums 30, der zwischen den beiden ferromagnetischen Bauteilhälften 25, 30 liegt, moduliert das Magnetfeld, das der Hall-Sensor 11 erfaßt. Die in Fig. 6 dargestellte Ausführungsform ist damit besonders dafür geeignet, daß der Hall-Sensor 11 jeweils dann ein Signal abgibt (und beispielsweise einen Schaltvorgang auslöst), wenn der Magnet 9 eine Abstufung des Zwischenraums 30 erreicht, bzw. passiert.

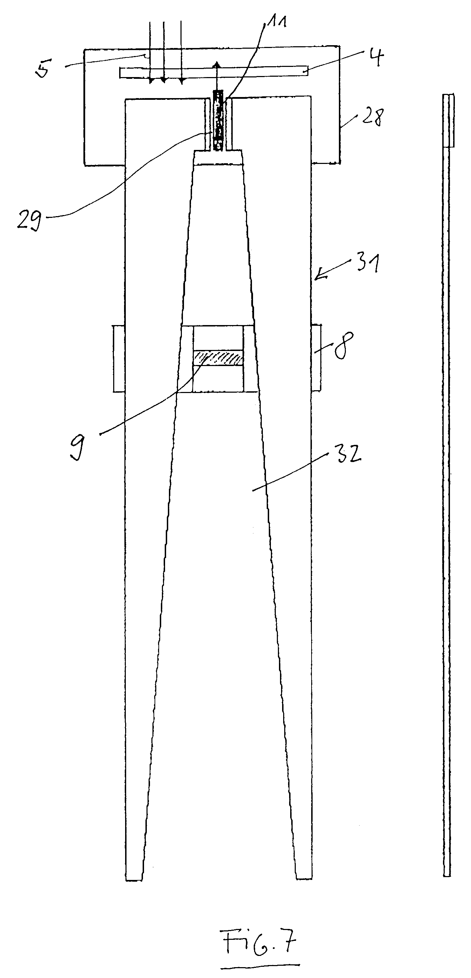

Figur 7 zeigt ein abgeändertes ferromagnetisches Bauteil 31, bei dem der Zwischenraum 32 zwischen seinen beiden spiegelsymmetrischen Hälften die Form eines kontinuierlichen Keiles hat, d.h. der Zwischenform 32 verbreitert sich stetig von oben nach unten. Diese Ausbildung ist besonders dann zweckmäßig, wenn der in dem oberen Luftspalt 29 abgekapselt angeordnete Hall-Sensor Signale zur kontinierlichen Anzeige des Flüssigkeitsstandes liefern soll.

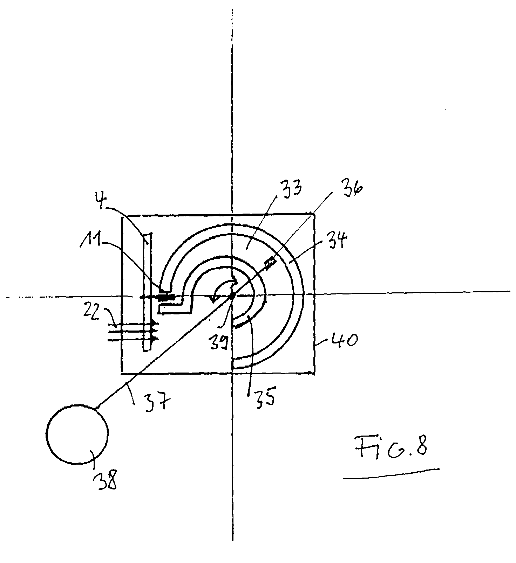

Bei der in Fig. 8 dargestellten Abwandlung der Ausführungsform gemäß Fig. 7 verbreitert sich der Zwischenraum 33 zwischen zwei ferromagnetischen Bauteilen 34 und 35 ebenfalls kontinuierlich, jedoch haben hier die Bauteile 34 und 35 eine gebogene Form. In dem Zwischenraum 33 befindet sich ein Magnet 36, der über ein wiederum nur schematisch angedeutetes Gestänge 37 mit einem Schwimmer 38 verbunden ist, der je nach Flüssigkeitsstand über das Gestänge 37 den Schwimmer 36 auf einer Kreisbahn um ein Zentrum 39 dreht. Ein Hall-Sensor 11 befindet sich wie bei den vorigen Ausführungsformen in einem Luftspalt am Endbereich der beiden Bauteile 34 und 35 und ist mit einer Platine 4 und Kontaktfahnen 22 verbunden. Die ganze Anordnung ist in einem Gehäuse 40 vor der umgebenden Flüssigkeit geschützt, wobei auf geeignete Weise gewährleistet ist, daß da, wo das Gestänge 37 aus dem Gehäuse 40 herausführt, keine Flüssigkeit ins Innere des Gehäuses 40 eindringen kann.

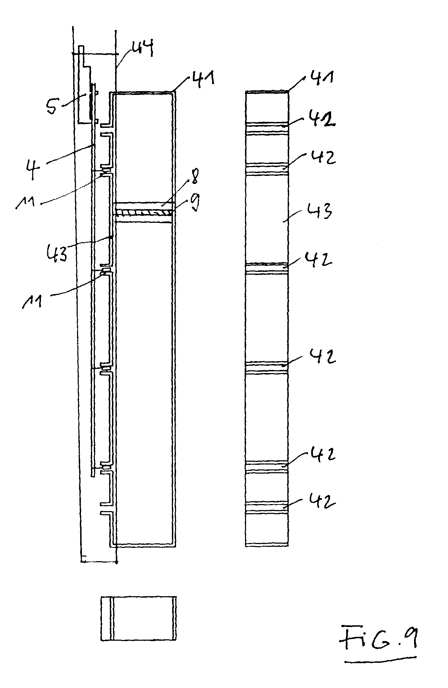

Bei der Ausführungsform gemäß Fig. 9 befindet sich in dem Flüssigkeitsbehälter ein Gehäuse 41 aus magnetisch leitendem Material, das in der Einbaulage vertikal angeordnet ist. In einer Seitenwand 43 des Gestells 41 befinden sich sechs über die gesamte Breite verlaufende spaltförmige Öffnungen 42. In vier dieser Luftspalte 42 sind Hall-Sensoren 11 angeordnet, die wiederum mit einer Platine 4 und Kontaktfahnen 5 verbunden sind. In dem obersten und dem untersten Luftspalt ist kein Hall-Sensor angeordnet.

Der Bereich der Platine 4 und der Hall-Sensoren 11 ist durch eine nur schematisch angedeutete Abschirmeinrichtung 44, die beispielsweise eine Rohrform haben kann, gegen die Flüssigkeit geschützt.

Im Inneren des ferromagnetischen Bauteils 41 befindet sich ein Schwimmer 8 mit einem Magneten 9, dessen Position sich in Abhängigkeit von dem jeweiligen Flüssigkeitsstand einstellt. Die Luftspalte 42, in denen die Hall-Sensoren 11 angeordnet sind, verändern in Abhängigkeit von der Entfernung des Magneten 9 jeweils das auf die Hall-Sensoren 11 einwirkende Magnetfeld, wodurch die Hall-Sensoren die Position des Magneten 9 erfassen können. Diese Ausführungsform ist dafür bestens geeignet, die Flüssigkeitsstände anzuzeigen, die mit der Höhenlage der einzelnen Hall-Sensoren 11 übereinstimmt, ohne aber hierauf beschränkt zu sein.

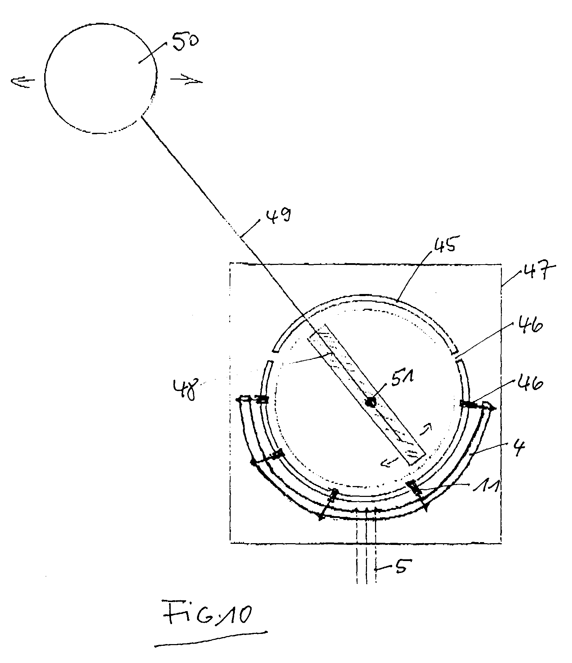

In Figur 10 ist das lineare System der Figur 9 zu einem kreisförmigen System abgeändert. Ein kreisförmiges Gehäuse 45 aus ferromagnetischem Material hat an mehreren Stellen Luftspalte 46, in denen wiederum Hall-Sensoren 11 sitzen, die mit einer kreisbogenförmigen Platine 4 verbunden sind. Die Anordnung bebefindet sich zusammen mit einem Magneten 48 innerhalb eines flüssigkeitsdichten Gehäuses 47. Der Magnet 48 ist um eine Achse 51 über ein Gestänge 49 drehbar, das mit einem Schwimmer 50 verbunden ist.

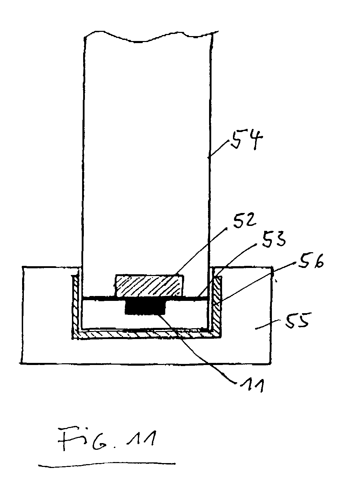

Fig. 11 zeigt rein schematisch eine weitere Ausführungsform der Erfindung, bei der ein Hall-Sensor 11 mit einem Magneten 52 gekoppelt ist. Zwischen den beiden Bauteilen ist ein Blech 53 angeordnet. Diese Anordnung befindet sich zusammen mit einer Platine und/oder Kontaktfahnen in einem flüssigkeitsdichten Gehäuse 54.

In einen Schwimmer 55, der sich bei der schematisch dargestellten Ausführungsform dem Hall-Sensor 11 von unten annähern kann, ist ein Element aus ferromagnetischem Material 56, beispielsweise ein Blech eingelassen.

Je nach Abstand des ferromagnetischen Elements 56 von dem Hall-Sensor 11 wird das Magnetfeld, mit dem der Magnet 52 auf den Hall-Sensor 11 einwirkt, moduliert, wodurch der Hall-Sensor ein die Entfernung (oder eine bestimmte Entfernung) anzeigendes Signal abgibt.

Diese Ausführungsform hat den Vorteil, daß der Schwimmer nur das sehr dünne und damit leichte ferromagnetische Element trägt und damit sehr klein ausgebildet sein kann. Der schwerere Magnet 52 bleibt in Ruhe und ist in dem Gehäuse 54 gekapselt, so daß hier keine Korrosionsprobleme auftreten können.

Die erfindungsgemäße Niveauüberwachungseinrichtung kann mehr Informationen als auf Reed-Schaltern basierende Systeme liefern. Außerdem ist es möglich, die erfindungsgemäße Einrichtung in ein Bus-System zur elektronischen System-Abfrage/Steuerung einzubinden.

## Patentansprüche

1. Einrichtung zur Erfassung des Flüssigkeitstandes in einem Behälter, mit einem Schwimmer,
**dadurch gekennezeichnet**,
daß der Schwimmer (8, 21, 50) mit einem Magneten (9, 51) verbunden ist und mit wenigstens einem Hall-Sensor (11) zusammenwirkt, der wenigstens ein einem Flüssigkeitsstand entsprechendes Signal für eine Anzeigeeinrichtung erzeugt.

2. Einrichtung zur Erfassung des Flüssigkeitsstandes in einem Behälter, mit einem Schwimmer,
dadurch gekennzeichnet, daß der Schwimmer (21, 55) mit einem Element (23, 56) aus ferromagnetischem Metall verbunden ist, das mit wenigstens einem Hall-Sensor (11) zusammenwirkt, der mit einem Magneten (18, 52) versehen ist und wenigstens ein einem Flüssigkeitsstand entsprechendes Signal für eine Anzeigeeinrichtung erzeugt.

3. Einrichtung nach Anspruch 1 oder 2,
dadurch gekennzeichnet, daß der Schwimmer (21, 50) mit einem Hebelsystem (19, 49) mit dem Magneten (51) oder dem Element (23) aus ferromagnetischem Material verbunden ist.

4. Einrichtung nach einem der Ansprüche 1 bis 3,
dadurch gekennzeichnet, daß der wenigstens eine Hall-Sensor (11) Signale zur kontinuierlichen Anzeige des Flüssigkeitsstandes erzeugt.

5. Einrichtung nach einem der Ansprüche 1 bis 3,
dadurch gekennzeichnet, daß der wenigstens eine Hall-Sensor (11) ein oder mehrere Signale zur diskreten Anzeige eines oder mehrerer Flüssigkeitsstände erzeugt.

6. Einrichtung nach einem der Ansprüche 1 bis 5,
dadurch gekennzeichnet, daß der wenigstens eine Hall-Sensor (11) vorzugsweise ohne Einbettung in Kunststoff in einem gegen die Flüssigkeit abgeschirmten Aufnahmeraum (10) angeordnet ist.

7. Einrichtung nach einem der Ansprüche 1 und 3 bis 6,
dadurch gekennzeichnet, daß der wenigstens eine Hall-Sensor im Bereich eines Luft-Spaltes (29, 42) eines aus ferromagnetischem Material bestehenden Bauteils (24, 31, 41) angeordnet ist, das einen weiteren Spalt (30, 32) aufweist, in dem sich der Magnet (9) bewegt.

8. Einrichtung nach Anspruch 7,
dadurch gekennzeichnet, daß der weitere Spalt (32) eine Keilform hat.

9. Einrichtung nach Anspruch 7,
dadurch gekennzeichnet, daß der weitere Spalte (30) eine Stufenform hat.

10. Einrichtung nach Anspruch 7,
dadurch gekennzeichnet, daß vorzugsweise vier Luftspalte (42) im Abstand übereinander in einer Wand (43) des Bauteils (41) ausgebildet sind, in denen jeweils ein Hall-Sensor (11) sitzt.
